# EUROPEAN PATENT SPECIFICATION

(11) **EP 4 550 836 B1**
(45) Date of publication and mention of the grant of the patent: **04.03.2026**
(21) Application number: 23830157.6
(22) Date of filing: 26.06.2023
(51) Int. Cl.: H04M 1/03, H04R 1/02, G06F 1/16, H04R 1/28, H04R 1/40, G10K 11/178, H04R 9/06

(54) **ELECTRONIC DEVICE**
ELEKTRONISCHE VORRICHTUNG
DISPOSITIF ÉLECTRONIQUE

(30) Priority: 30.06.2022 CN 202210760536
(43) Date of publication of application: 07.05.2025
(73) Proprietor: Vivo Mobile Communication Co., Ltd., Dongguan, Guangdong 523863 (CN)
(72) Inventor: ZHENG, Ningjie, Dongguan, Guangdong 523863 (CN); WEI, Yang, Dongguan, Guangdong 523863 (CN)
(74) Representative: Lavoix
(86) International application number: PCT/CN2023/102275
(87) International publication number: WO 2024/001979

(56) References cited:
- CN-A- 111 031 163
- CN-A- 112 261 187
- CN-A- 113 099 364
- CN-A- 113 099 364
- CN-A- 114 945 128
- CN-A- 115 967 900
- CN-U- 215 871 825
- CN-U- 216 700 051
- CN-U- 218 450 508
- CN-U- 219 068 347

## Description

### TECHNICAL FIELD

The present invention relates to the field of electronic device design technologies, and in particular, to an electronic device.

### BACKGROUND

The call function is a basic function of some electronic devices and realized by a sound apparatus of the electronic device. When a user holds an electronic device to make a call, the sound of the electronic device may leak to the external environment, leading to a privacy leakage of the user. To mitigate the sound leakage, in the electronic device in the related art, an electroacoustic apparatus is provided with an opening that is communicated with a rear cavity. In such case, the vibrations of diaphragms of the sound apparatus cause a first sound wave emitted from the opening and a second sound wave emitted from a front cavity of the electroacoustic apparatus to form out-of-phase sound waves, ultimately achieving a certain degree of cancellation, thereby alleviating sound leakage. However, the opening causes the rear cavity of the sound apparatus to communicate with the external environment, making it easier for a foreign matter (liquid, solid particle, and the like) to intrude into the sound apparatus, thus resulting in the drawback of the electronic device being susceptible to intrusion of the foreign matter.

CN113099364A describes an electronic device, comprising a housing and a sound generation apparatus. The sound generation apparatus comprises a fixed housing, a magnetic circuit system and two vibration systems, wherein the magnetic circuit system is arranged inside the fixed housing; each vibration system comprises a vibration diaphragm and a voice coil, which is connected to the vibration diaphragm; the two vibration diaphragms are respectively arranged on two opposite sides of the magnetic circuit system and are connected to the fixed housing; and the voice coils of the two vibration systems at least partially extend into a magnetic gap of the magnetic circuit system. The housing is provided with a mounting cavity and two voice output portions; the sound generation apparatus divides the mounting cavity into two sound output cavities, with one of the voice output portions and one of the vibration diaphragms being in communication with one of the sound output cavities, and the other one of the voice output portions and the other one of the vibration diaphragms being in communication with the other one of the sound output cavities. The electronic device has a loudspeaker mode and a receiver mode; when in the loudspeaker mode, the two vibration systems radiate, in an outwards manner, sound waves having identical phases; and when in the receiver mode, the two vibration systems radiate, in an outwards manner, sound waves having opposite phases. By means of the technical solution of the present invention, the risk of sound leakage of an electronic device can be reduced.

### SUMMARY

The present invention discloses an electronic device that aims to resolve the problem of a foreign matter easily intruding into an electronic device as well as sound leakage.

The invention is set out in the appended set of claims.

The technical solutions used in the present invention can achieve the following beneficial effects:

The electronic device disclosed in this application improves the structure of electronic devices in the related art, enabling the electronic device to form a first front cavity that is communicated with the first sound hole and a second front cavity that is communicated with the second sound hole, respectively. In the first state, the first sound wave emitted from the first sound hole and the second sound wave emitted from the second sound hole can achieve a certain degree of cancellation due to opposite phases, thereby addressing the issue of sound leakage. Since the first front cavity and the second front cavity transmit the first sound wave and second sound wave with opposite phases and the sound leakage issue can be addressed through sound wave cancellation, avoiding providing for the sound apparatus the opening that is communicated with the rear cavity thereof and preventing the foreign matter from intruding into the rear cavity, thereby addressing the issue of the electronic device being susceptible to intrusion of the foreign matter.

### BRIEF DESCRIPTION OF DRAWINGS

FIG. 1 is a schematic structural diagram of a sound apparatus according to an embodiment of this application;
FIG. 2 is a schematic structural exploded view of an electronic device according to an embodiment of this application;
FIG. 3 is a schematic enlarged view of a partial structure in FIG. 2.
FIG. 4 is a cross-sectional view of a partial structure of an electronic device according to an embodiment of this application;
FIG. 5 is a schematic diagram of a partial exterior of the electronic device in FIG. 4;
FIG. 6 is a schematic structural diagram of another sound apparatus according to an embodiment of this application;
FIG. 7 is a cross-sectional view of a partial structure of another electronic device according to an embodiment of this application;
FIG. 8 is a schematic diagram of a partial structure of another electronic device according to an embodiment of this application; and
FIG. 9 is a comparison diagram of sound leakage curves.

Reference numerals in the accompanying drawings are described as follows:
100. device housing, 110. frame body, 111. enclosure frame, 1111. second sound hole, 112. support plate, 1121. first through hole, 1122. positioning hole, 1123. third through hole, 120. cover body,
200. sound apparatus, 210. apparatus housing, 211. first housing, 2111. positioning protrusion, 2112. second through hole, 212. second housing, 220. electroacoustic module, 221. first diaphragm, 222. second diaphragm, 230. first cover plate, 2101. second cover plate, 2102. second housing body,
300. screen, 310. first sound hole,
400. second speaker,
101. first front cavity, 102. second front cavity, 1021. front cavity sound transmission channel, 103. rear cavity, 1031. first sub rear cavity, 1032. second sub rear cavity, 1033. third sub rear cavity, 104. housing inner cavity, 105. connection channel,
201. first sealing member, 202. second sealing member, 203. third sealing member, and 204. fourth sealing member.

### DETAILED DESCRIPTION OF EMBODIMENTS

To make the objectives, technical solutions, and advantages of the present invention clearer, the following clearly and completely describes the technical solutions of the present invention with reference to the specific embodiments of the present invention and the corresponding accompanying drawings. Apparently, the described embodiments are merely some but not all of the embodiments of the present invention.

The technical solutions disclosed in the embodiments of the present invention are described in detail below with reference to the accompanying drawings.

The embodiments of this application disclose an electronic device, and the disclosed electronic device may be a smartphone, a tablet computer, an e-book reader, a game console, or the like. A specific type of the electronic device is not limited in this embodiment of this application.

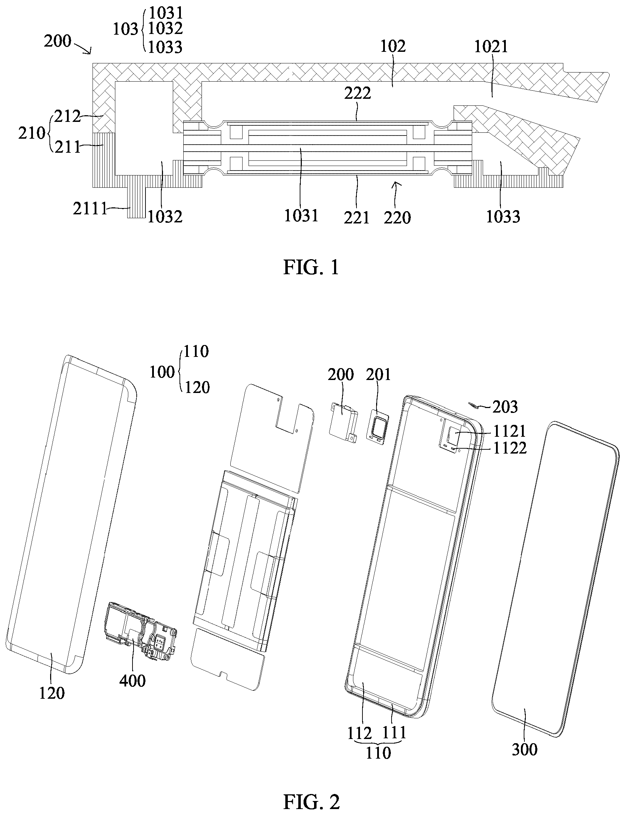

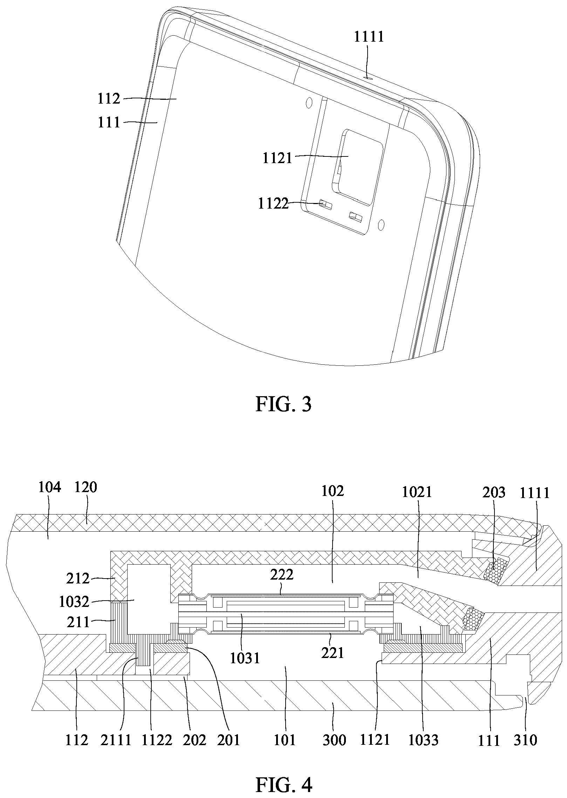

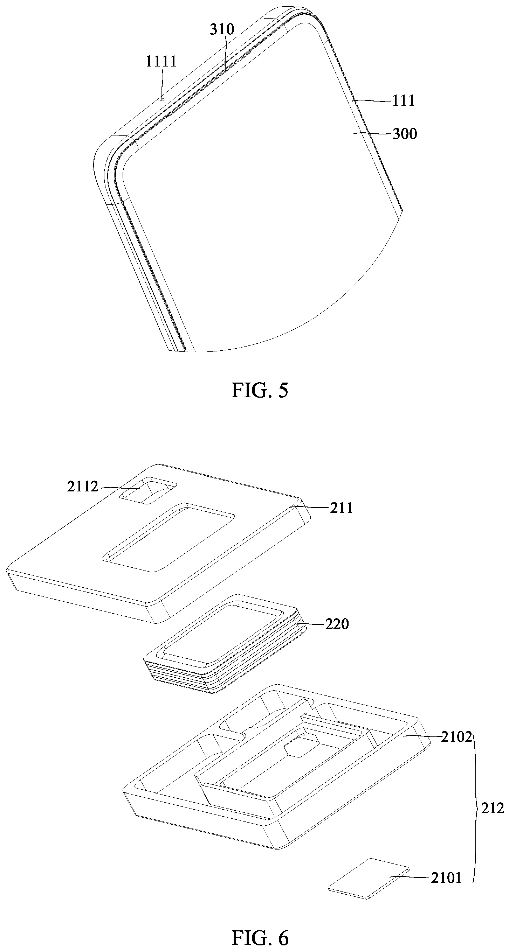

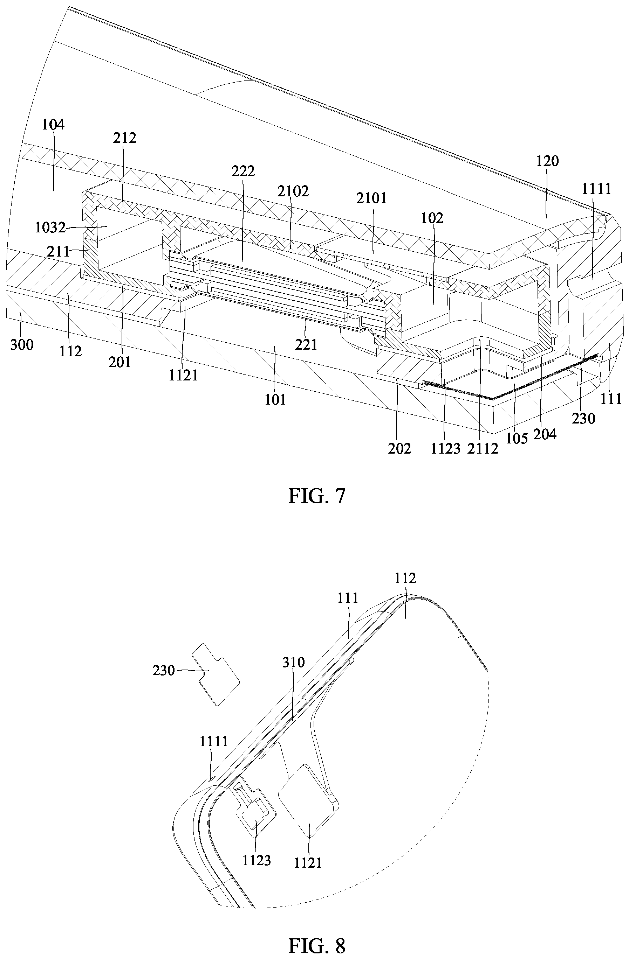

Referring to FIGs. 1 to 9, the electronic device disclosed in an embodiment of this application includes a device housing 100, a sound apparatus 200, and a screen 300.

The device housing 100, as a basic component of the electronic device, can directly or indirectly provide an installation base for other components of the electronic device and protection for at least some other components of the electronic device. The screen 300 and the sound apparatus 200 may be directly or indirectly mounted on the device housing 100, thereby achieving installation on the device housing 100. Specifically, the sound apparatus 200 is disposed in the device housing 100, thereby achieving installation based on the device housing 100 and obtaining protection from the device housing 100.

In an embodiment of this application, the screen 300 covers the device housing 100. Specifically, the screen 300 and the device housing 100 may be fixedly bonded using an adhesive layer. A first sound hole 310 is provided at a joint between the screen 300 and the device housing 100. The device housing 100 is provided with a second sound hole 1111.

Both the first sound hole 310 and the second sound hole 1111 are used for sound output. Specifically, the first sound hole 310 may be provided at an edge of the screen 300 connected to the device housing 100, or at an edge of the device housing 100 connected to the screen 300. Certainly, after the first sound hole 310 and the device housing 100 are connected, their connected portions can be spliced for forming the first sound hole 310. This embodiment of this application does not limit the specific position and formation method of the first sound hole 310.

In an optional solution, there is an assembly relationship between the screen 300 and the device housing 100. The screen 300 is assembled with the device housing 100, providing an assembly gap at the joint between the screen 300 and the device housing 100. The assembly gap can serve as the first sound hole 310. In this case, using the assembly gap as the first sound hole 310 can fully utilize the existing structure of the electronic device, thereby avoiding specially creating the first sound hole 310. Additionally, the assembly gap is typically small, and using the assembly gap as the first sound hole 310 provides a better advantage in preventing a foreign matter from intruding into the electronic device.

The sound apparatus 200 is an apparatus capable of emitting sound in the electronic device. The sound apparatus 200 is disposed in the device housing 100. Specifically, the sound apparatus 200 can be fixedly installed in the device housing 100 through bonding, connection by a connector, snap-fitting, or other means.

In this embodiment of this application, the sound apparatus 200 includes an apparatus housing 210 and an electroacoustic module 220. The apparatus housing 210 is a housing portion of the sound apparatus 200, and the electroacoustic module 220 is a sound-generating portion of the sound apparatus 200. The electroacoustic module 220 is disposed in the apparatus housing 210. Specifically, the electroacoustic module 220 is fixed in the apparatus housing 210, and the apparatus housing 210 is connected to the device housing 100, thereby achieving the installation of the electroacoustic module 220 along with the apparatus housing 210 in the device housing 100. The apparatus housing 210 and the device housing 100 may be connected in fixation manners such as bonding, snap-fitting, or connection by a connector.

The electroacoustic module 220 includes a first diaphragm 221 and a second diaphragm 222. During specific operation, the vibration of the first diaphragm 221 can generate a first sound wave, and the vibration of the second diaphragm 222 can generate a second sound wave. The vibration directions of the first diaphragm 221 and the second diaphragm 222 may be the same or different.

As described above, the electroacoustic module 220 is disposed in the apparatus housing 210. Specifically, the apparatus housing 210 is connected to the first diaphragm 221 and the second diaphragm 222. At least the apparatus housing 210, the screen 300, the device housing 100, and the first diaphragm 221 enclose to form a first front cavity 101, and the first front cavity 101 is communicated with the first sound hole 310. The first sound wave formed by the vibration of the first diaphragm 221 propagates to the environment where the electronic device is located sequentially through the first front cavity 101 and the first sound hole 310, thereby achieving sound emission.

At least the apparatus housing 210 and the second diaphragm 222 enclose to form a second front cavity 102, and the second front cavity 102 is communicated with the second sound hole 1111. The second sound wave formed by the vibration of the second diaphragm 222 propagates to the environment of the electronic device sequentially through the second front cavity 102 and the second sound hole 1111, thereby achieving sound emission.

The electroacoustic module 220 disclosed in this embodiment of this application has a first state. When the electroacoustic module 220 is in the first state, the first sound wave formed by the vibration of the first diaphragm 221 and the second sound wave formed by the vibration of the second diaphragm 222 are in opposite phases. The first sound wave and second sound wave with opposite phases can superpose when emitted outside the electronic device, achieving a certain degree of cancellation and mitigating the phenomenon of the first sound wave and second sound wave being heard by other people in a further region, thereby alleviating sound leakage.

Compared with the electronic devices in the related art, the electronic device disclosed in this embodiment of this application has an improved structure, enabling the electronic device to form the first front cavity 101 that is communicated with the first sound hole 310 and the second front cavity 102 that is communicated with the second sound hole 1111, respectively. In the first state, the first sound wave emitted from the first sound hole 310 and the second sound wave emitted from the second sound hole 1111 have opposite phases, achieving a certain degree of cancellation, thereby addressing the issue of sound leakage. Since the first front cavity 101 and the second front cavity 102 transmit the first sound wave and second sound wave with opposite phases and the sound leakage issue can be addressed through sound wave cancellation, avoiding providing for the sound apparatus the opening that is communicated with the rear cavity thereof and preventing the foreign matter from intruding into the rear cavity, thereby addressing the issue of the electronic device being susceptible to intrusion of the foreign matter.

In this embodiment of this application, the apparatus housing 210 may be of an integrated structure. For example, it can be formed by bending or cold pressing a sheet of housing raw material, and the electroacoustic module 220 may be directly wrapped during formation, thereby achieving the assembly connection of the electroacoustic module 220 and the apparatus housing 210. Certainly, considering ease of assembly, in another optional solution, the apparatus housing 210 may be of a split structure, including a first housing 211 and a second housing 212, the first housing 211 being connected to the second housing 212. Specifically, the first housing 211 and the second housing 212 may be assembled and connected through bonding, welding, or other means. This structure can achieve the connection between the first housing 211 and the second housing 212 through assembly, without the need for complex process device, thereby having the advantage of easy assembly.

Since the electroacoustic module 220 and the apparatus housing 210 have an assembly relationship, at least one of the first housing 211 and the second housing 212 has an assembly relationship with the electroacoustic module 220. Based on this, in a further technical solution, the first housing 211 is connected to the first diaphragm 221, and the second housing 212 is connected to the second diaphragm 222, thereby achieving the connection between the apparatus housing 210 and the electroacoustic module 220. Specifically, the first housing 211 and the first diaphragm 221 may be connected through bonding, and similarly, the second housing 212 and the second diaphragm 222 may also be connected through bonding. Certainly, the connection between the first housing 211 and the second housing 212 allows for an interference fit between the first housing 211 and the first diaphragm 221, as well as between the second housing 212 and the second diaphragm 222, thereby achieving the assembly connection between them. Certainly, in this case, the sound apparatus 200 can be clamped by the first housing 211 and the second housing 212, thereby achieving fixed installation. Certainly, it should be noted that the interference fit mentioned here is also a type of connection.

In the case that the apparatus housing 210 includes the first housing 211 and the second housing 212, the first front cavity 101 is at least enclosed by the first housing 211, the screen 300, the device housing 100, and the first diaphragm 221, and the second front cavity 102 is at least enclosed by the second housing 212 and the second diaphragm 222. This method of forming the first front cavity 101 and the second front cavity 102 through separate cooperation of the components (for example, the first housing 211 and the second housing 212) of the apparatus housing 210 of the split structure with the electroacoustic module 220 can be easily achieved through assembly.

As described above, the electroacoustic module 220 disclosed in this embodiment of this application has a first state. In the first state, the first sound wave and the second sound wave are mutually inverse sound waves, and undergo a certain degree of cancellation during propagation. Therefore, in a case of the electroacoustic module 220 being in the first state, the sound apparatus 200 generates a low sound. In such case, the sound apparatus 200 is equivalent to a receiver, and when the user uses the electronic device for a call, the sound apparatus 200 functions as a receiver, emitting a low sound for the user to listen to within a close range. Due to the inverse cancellation of sound waves, the sound emitted by the sound apparatus 200 is canceled during long-distance propagation. This makes it difficult for others at a distance to hear the call content, thereby addressing the issue of sound leakage and better protecting call privacy.

In a further technical solution, the electroacoustic module 220 may further have a second state. Certainly, the second state is different from the first state. When the electroacoustic module 220 is in the second state, the first sound wave formed by the vibration of the first diaphragm 221 and the second sound wave formed by the vibration of the second diaphragm 222 are in a same phase. In this case, the first sound wave and the second sound wave with the same phase superpose after emitted from the first sound hole 310 and the second sound hole 1111, achieving enhancement and ultimately producing a high sound. In this case, the sound apparatus 200 is equivalent to a speaker, capable of performing the function of a speaker. Clearly, the sound apparatus 200 can perform the functions of a receiver and a speaker, thereby avoiding the need for the electronic device to be equipped with both a receiver and a speaker, which is beneficial for simplifying the structure of the electronic device. It should be noted that in this specification the control of whether the first sound wave and the second sound wave formed by the electroacoustic module 220 are in the same phase or different phases is prior art and is not further described here.

In a further technical solution, in the second state, the sound apparatus 200 is a first speaker, and the electronic device disclosed in this embodiment of this application may further include a second speaker 400. The second speaker 400 is disposed in the device housing 100. Specifically, the second speaker 400 may also be fixed in the device housing 100 by bonding, snap-fitting, or connection by a connector, thereby achieving installation.

The sound emission direction of the first speaker and the sound emission direction of the second speaker 400 may be the same or different. If the sound emission direction of the first speaker and the sound emission direction of the second speaker 400 are the same, the electronic device can achieve a stronger loudspeaking effect. If the sound emission direction of the first speaker and the sound emission direction of the second speaker 400 are different, they can emit sound in different directions, ultimately enabling the electronic device to provide a stereo sound effect in the speaker mode. This can improve the sound performance of the electronic device. It should be noted that in this specification the sound emission direction of the first speaker being different from the sound emission direction of the second speaker 400 means the orientations of the sound holes (that is, the first sound hole 310 and the second sound hole 1111) of the first speaker are different from an orientation of the sound hole of the second speaker 400.

Optionally, the sound apparatus 200 may be located at the top end of the electronic device, and the second speaker 400 may be located at the bottom end of the electronic device, as shown in FIG. 2. This layout can easily achieve different sound emission directions for the first speaker and the second speaker 400.

In this embodiment of this application, the sound apparatus 200 has a rear cavity 103, which can achieve the low pitch performance of the sound apparatus 200. In an optional solution, the first diaphragm 221 is disposed opposite the second diaphragm 222, with a first sub rear cavity 1031 formed therebetween. The apparatus housing 210 and the electroacoustic module 220 enclose to form a second sub rear cavity 1032, the first sub rear cavity 1031 is communicated with the second sub rear cavity 1032, and the rear cavity 103 includes the first sub rear cavity 1031 and the second sub rear cavity 1032. Certainly, the rear cavity 103 of the sound apparatus 200 may only include the first sub rear cavity 1031. As compared to the rear cavity 103 that only includes the first sub rear cavity 1031, the second sub rear cavity 1032 enclosed by the apparatus housing 210 and the electroacoustic module 220 can cooperate with the first sub rear cavity 1031, thereby expanding the space of the rear cavity 103 and further improving the low pitch performance of the sound apparatus 200.

As described above, the first diaphragm 221 is disposed opposite the second diaphragm 222, making their vibration directions consistent. Specifically, the first diaphragm 221 and the second diaphragm 222 may vibrate along a first direction, and the second sub rear cavity 1032 is located on a first side of the electroacoustic module 220. The second sub rear cavity 1032 and the electroacoustic module 220 are sequentially distributed along a second direction, where the first direction is perpendicular to the screen 300, and the second direction is perpendicular to the first direction. This structure allows the second sub rear cavity 1032 to be sequentially distributed along the second direction, thereby avoiding stacking in a direction perpendicular to the screen 300. Typically, the direction perpendicular to the screen 300 is the thickness direction of the electronic device. Forming the second sub rear cavity 1032 on the first side of the electroacoustic module 220 in the second direction avoids stacking in the thickness direction of the electronic device, thus avoiding a large thickness of the electric device, facilitating the design of thinner electronic devices.

In a further technical solution, the apparatus housing 210 and the electroacoustic module 220 enclose to form a third sub rear cavity 1033. The third sub rear cavity 1033 is communicated with at least one of the first sub rear cavity 1031 and the second sub rear cavity 1032. The third sub rear cavity 1033 and the electroacoustic module 220 are sequentially distributed along the second direction and located on the second side of the electroacoustic module 220. The first side and the second side are two opposite sides of the electroacoustic module 220. This structure can further increase the volume of the rear cavity 103 by adding the third sub rear cavity 1033, thereby better improving the low pitch performance of the sound apparatus 200.

Specifically, the height of the third sub rear cavity 1033 decreases in a direction away from the electroacoustic module 220. It should be noted that the height refers to the dimension of the third sub rear cavity 1033 in the thickness direction of the electronic device. The thickness direction is perpendicular to the screen 300. The second front cavity 102 has a front cavity sound transmission channel 1021. The second front cavity 102 is communicated with the second sound hole 1111 through the front cavity sound transmission channel 1021. The second sound hole 1111 is provided on the device housing 100. The front cavity sound transmission channel 1021 can be stacked on the second sub rear cavity 1032 in the thickness direction of the electronic device. The opening of the front cavity sound transmission channel 1021 gradually increases in the direction near the second sound hole 1111 to achieve better sound output. The gradually decreasing height of the third sub rear cavity 1033 can better adapt to the size variation of the opening of the front cavity sound transmission channel 1021.

In the electronic device disclosed in this embodiment of the application, the device housing 100 has a housing inner cavity 104, and the sound apparatus 200 has a rear cavity 103. In an optional solution, the first diaphragm 221 may be a first water-proof diaphragm, and the first front cavity 101 is isolated from the housing inner cavity 104 and the rear cavity 103, thereby preventing particles and liquids entering the first front cavity 101 from entering the housing inner cavity 104 or the rear cavity 103, further improving dustproof and water-proof performance.

Similarly, in another optional solution, the second diaphragm 222 may be a second water-proof diaphragm, and the second front cavity 102 is isolated from the housing inner cavity 104 and the rear cavity 103, thereby preventing particles and liquids entering the second front cavity 102 from entering the housing inner cavity 104 or the rear cavity 103, further improving dustproof and water-proof performance.

In this embodiment of this application, the device housing 100 may include a frame body 110 and a cover body 120. The frame body 110 includes an enclosure frame 111 and a support plate 112. The support plate 112 is located in a region surrounded by the enclosure frame 111. The screen 300 and the cover body 120 are respectively connected to the opposite sides of the frame body 110. The cover body 120 and the frame body 110 enclose to form the housing inner cavity 104. Specifically, the cover body 120 may be a battery cover. The support plate 112 and the enclosure frame 111 may be of an integrated structure, or split structures fixedly connected through assembly.

The sound apparatus 200 is disposed in the housing inner cavity 104, and the support plate 112 is located between the sound apparatus 200 and the screen 300. The support plate 112 is provided with a first through hole 1121, and a first sealing member 201 is disposed between the apparatus housing 210 and the support plate 112. The first sealing member 201 surrounds the first through hole 1121, and a second sealing member 202 may be disposed between the support plate 112 and the screen 300. In an optional solution, the first diaphragm 221, the apparatus housing 210, the support plate 112, the first sealing member 201, the second sealing member 202, and the screen 300 enclose to form the first front cavity 101. This structure of the device housing 100 can enclose to form the housing inner cavity 104 while also providing an installation position for the sound apparatus 200 with the support plate 112. Additionally, the first front cavity 101 and the housing inner cavity 104 are sealed and isolated by the first sealing member 201 and the second sealing member 202.

The support plate 112 can provide an installation position for the sound apparatus 200. For ease of installation, one of the support plate 112 and the apparatus housing 210 may be provided with a positioning hole 1122, and the other may be provided with a positioning protrusion 2111. The positioning hole 1122 is matched with the positioning protrusion 2111. During installation of the sound apparatus 200, an operator can first insert the positioning protrusion 2111 into the positioning hole 1122 for pre-positioning, and then connect the apparatus housing 210 and the support plate 112. Specifically, the apparatus housing 210 and the support plate 112 can be connected through connection by a connector (a threaded connector), bonding, or other means.

In this context, the second sound hole 1111 may be provided on the enclosure frame 111. A first end surface of the apparatus housing 210 may be provided with a sound opening that is communicated with the second front cavity 102 (which can be considered as a port of the front cavity sound transmission channel 1021). A third sealing member 203 may be disposed between the first end surface and the inner wall of the enclosure frame 111. The second sound hole 1111 is communicated with the sound opening. Providing the second sound hole 1111 on the enclosure frame 111 can easily achieve a different orientation from the first sound hole 310, thereby improving the sound effect. Additionally, as provided on the enclosure frame 111, the second sound hole 1111 is more easily exposed on a side surface of the electronic device. This design allows the second sound hole 1111 to be less noticeable, thereby helping to improve the aesthetic performance of the electronic device.

In a further technical solution, the apparatus housing 210 may be provided with a second through hole 2112, and the support plate 112 is provided with a third through hole 1123. The second through hole 2112 and the first diaphragm 221 are located on the same side of the apparatus housing 210. The second through hole 2112 and the first diaphragm 221 both face the support plate 112. The third through hole 1123 and the first through hole 1121 may face the same direction. The second through hole 2112 is communicated with the third through hole 1123, and the second front cavity 102 is communicated with the second through hole 2112. The second sound hole 1111 is provided on the enclosure frame 111. The sound apparatus 200 further includes a first cover plate 230. The first cover plate 230 is disposed on the apparatus housing 210 and forms a connection channel 105 with the apparatus housing 210. Specifically, the first cover plate 230 can be connected to the apparatus housing 210 by bonding, snap-fitting, or other means. Certainly, in the case that the apparatus housing 210 includes the first housing 211 and the second housing 212, the second through hole 2112 may be provided on the first housing 211.

In an optional solution, the front cavity sound transmission channel 1021 is formed on the second housing 212. In this case, the structure of the second housing 212 is complex. To facilitate the manufacturing of the second housing 212, it can be of a split structure. Specifically, the second housing 212 may include a second cover plate 2101 and a second housing body 2102. The second housing body 2102 may be provided with a process hole, and the second cover plate 2101 is mounted on the second housing body 2102, sealing the process hole. In this case, the second housing body 2102 can be manufactured first, and then the second cover plate 2101 is mounted on the second housing body 2102. Since the process hole can expose more of the internal structure of the second housing 212, it allows for easier implementation of the manufacturing process of the second housing 212. The second housing body 2102 may be formed through injection molding, and the process hole allows for easier demolding.

The connection channel 105 is communicated with the third through hole 1123 and the second sound hole 1111. The electronic device may further include a fourth sealing member 204. The fourth sealing member 204 is disposed between the support plate 112 and the apparatus housing 210, and surrounds the second through hole 2112 and the third through hole 1123. The fourth sealing member 204 and the first sealing member 201 may be coplanar. This structure allows the parts to be sealed between the sound apparatus 200 and the device housing 100 to be located on the same side of the apparatus housing 210, which undoubtedly facilitates the sealing design and sealing assembly.

In an optional solution, the fourth sealing member 204 and the first sealing member 201 may be of an integrated structure, with corresponding parts provided with avoidance holes to avoid the corresponding through holes. In this case, only one overall sealing structure needs to be installed, which undoubtedly facilitates the operation.

In this embodiment of this application, the first sealing member 201, the second sealing member 202, the third sealing member 203, and the fourth sealing member 204 may be sealing foam members or sealing silicone members. This embodiment of this application does not limit their materials.

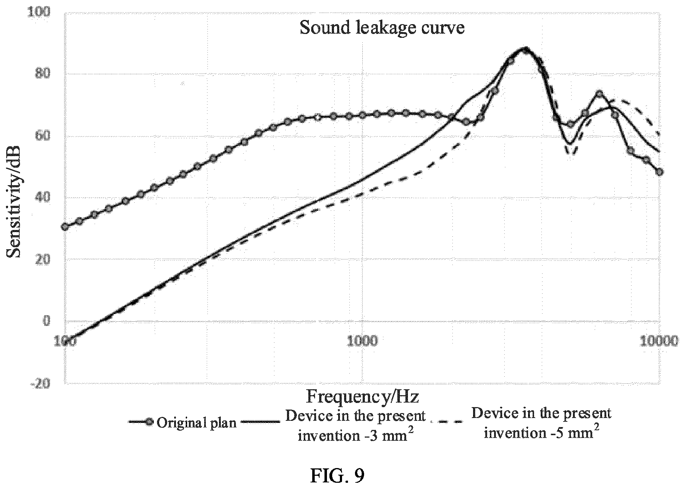

Refer to FIG. 9. Compared to the electronic device provided with an opening that is communicated with a rear cavity described in the background, the electronic device disclosed in this embodiment of this application has lower sensitivity in the audible sound range. In other words, the electronic device disclosed in this embodiment of this application has a better effect in mitigating sound leakage. In FIG. 9, a solid curve represents a sound leakage curve for the second sound hole 1111 with an area of 3 mm², and a dashed curve represents a sound leakage curve for the second sound hole 1111 with an area of 5 mm².

The foregoing embodiments of the present invention focus on the differences between the embodiments. As long as the different features of improvement in the embodiments are not contradictory, they can be combined to form a more preferred embodiment. For brevity, details are not repeated here.

## Claims

1. An electronic device, comprising a device housing (100), a sound apparatus (200), and a screen (300), wherein the screen (300) covers the device housing (100) and is provided with a first sound hole (310) at a joint with the device housing (100), the sound apparatus (200) is disposed in the device housing (100), the sound apparatus (200) comprises an apparatus housing (210) and an electroacoustic module (220), the electroacoustic module (220) comprises a first diaphragm (221) and a second diaphragm (222), the apparatus housing (210) is connected to the first diaphragm (221) and the second diaphragm (222), and the device housing (100) is provided with a second sound hole (1111);
at least the apparatus housing (210), the screen (300), the device housing (100), and the first diaphragm (221) form a first front cavity (101), and the first front cavity (101) is connected with the first sound hole (310);
at least the apparatus housing (210) and the second diaphragm (222) form a second front cavity (102), and the second front cavity (102) is connected with the second sound hole (1111); and
when the electroacoustic module (220) is in a first state, the first sound wave formed by the vibration of the first diaphragm (221) and the second sound wave formed by the vibration of the second diaphragm (222) are in opposite phases;
**characterized in that** the sound apparatus (200) has a rear cavity (103), the first diaphragm (221) is disposed opposite the second diaphragm (222), with a first sub rear cavity (1031) formed therebetween, the apparatus housing (210) and the electroacoustic module (220) form a second sub rear cavity (1032), the first sub rear cavity (1031) is connected with the second sub rear cavity (1032), and the rear cavity (103) comprises the first sub rear cavity (1031) and the second sub rear cavity (1032).

2. The electronic device according to claim 1, wherein the apparatus housing (210) is of a split structure and comprises a first housing (211) and a second housing (212), the first housing (211) is connected to the second housing (212), the first housing (211) is connected to the first diaphragm (221), and the second housing (212) is connected to the second diaphragm (222);
at least the first housing (211), the screen (300), the device housing (100), and the first diaphragm (221) form the first front cavity (101); and
at least the second housing (212) and the second diaphragm (222) form the second front cavity (102).

3. The electronic device according to claim 1, wherein when the electroacoustic module (220) is in a second state, the first sound wave formed by the vibration of the first diaphragm (221) and the second sound wave formed by the vibration of the second diaphragm (222) are in a same phase.

4. The electronic device according to claim 3, wherein in the second state, the sound apparatus (200) is a first speaker, the electronic device further comprises a second speaker (400), the second speaker (400) is disposed at the device housing (100), and a sound emission direction of the first speaker is different from a sound emission direction of the second speaker (400).

5. The electronic device according to claim 1, wherein the first diaphragm (221) and the second diaphragm (222) are capable of vibrating along a first direction, the second sub rear cavity (1032) is disposed on a first side of the electroacoustic module (220), the second sub rear cavity (1032) and the electroacoustic module (220) are sequentially distributed along a second direction, the first direction is perpendicular to the screen (300), and the second direction is perpendicular to the first direction.

6. The electronic device according to claim 5, wherein the apparatus housing (210) and the electroacoustic module (220) form a third sub rear cavity (1033), the third sub rear cavity (1033) is connected with at least one of the first sub rear cavity (1031) and the second sub rear cavity (1032), the third sub rear cavity (1033) and the electroacoustic module (220) are sequentially distributed along the second direction and located on a second side of the electroacoustic module (220), the first side and the second side are two opposite sides of the electroacoustic module (220), and a height of the third sub rear cavity (1033) gradually decreases in a direction away from the electroacoustic module (220).

7. The electronic device according to claim 1, wherein an assembly gap is present at a joint between the screen (300) and the device housing (100), and the assembly gap is the first sound hole (310).

8. The electronic device according to claim 1, wherein the device housing (100) has a housing inner cavity (104), and the sound apparatus (200) has a rear cavity (103), wherein
the first diaphragm (221) is a first water-proof diaphragm, and the first front cavity (101) is sealed and isolated from the housing inner cavity (104) and the rear cavity (103) respectively; and/or
the second diaphragm (222) is a second water-proof diaphragm, and the second front cavity (102) is sealed and isolated from the housing inner cavity (104) and the rear cavity (103) respectively.

9. The electronic device according to claim 8, wherein the device housing (100) comprises a frame body (110) and a cover body (120);
the frame body (110) comprises an enclosure frame (111) and a support plate (112), the screen (300) and the cover body (120) are respectively connected to two opposite sides of the frame body (110), the cover body (120) and the frame body (110) form the housing inner cavity (104), the sound apparatus (200) is disposed in the housing inner cavity (104), the support plate (112) is located between the sound apparatus (200) and the screen (300) and in a region enclosed by the enclosure frame (111), and the support plate (112) is provided with a first through hole (1121); and
a first sealing member (201) is disposed between the apparatus housing (210) and the support plate (112), the first sealing member (201) surrounds the first through hole (1121), a second sealing member (202) is disposed between the support plate (112) and the screen (300), and the first diaphragm (221), the apparatus housing (210), the support plate (112), the first sealing member (201), the second sealing member (202), and the screen (300) form the first front cavity (101).

10. The electronic device according to claim 9, wherein one of the support plate (112) and the apparatus housing (210) is provided with a positioning hole (1122), and the other is provided with a positioning protrusion (2111), and the positioning hole (1122) is matched with the positioning protrusion (2111) for positioning.

11. The electronic device according to claim 9, wherein the second sound hole (1111) is provided in the enclosure frame (111), a first end surface of the apparatus housing (210) is provided with a sound opening in communication with the second front cavity (102), a third sealing member (203) is disposed between the first end surface and an inner wall of the enclosure frame (111), and the second sound hole (1111) is connected with the sound opening.

12. The electronic device according to claim 9, wherein the apparatus housing (210) is provided with a second through hole (2112), the support plate (112) is provided with a third through hole (1123), the second through hole (2112) is connected with the third through hole (1123), the second front cavity (102) is connected with the second through hole (2112), and the second sound hole (1111) is provided in the enclosure frame (111);
the sound apparatus (200) further comprises a first cover plate (230), the first cover plate (230) is disposed on the apparatus housing (210) and forms a connection channel (105) with the apparatus housing (210), and the connection channel (105) connects the third through hole (1123) and the second sound hole (1111); and
the electronic device further comprises a fourth sealing member (204), the fourth sealing member (204) is disposed between the support plate (112) and the apparatus housing (210), and surrounds the second through hole (2112) and the third through hole (1123), and the fourth sealing member (204) and the first sealing member (201) are coplanar.

## Patentansprüche

1. Elektronische Vorrichtung, umfassend ein Vorrichtungsgehäuse (100), ein Schallgerät (200) und einen Bildschirm (300), wobei der Bildschirm (300) das Vorrichtungsgehäuse (100) abdeckt und mit einem ersten Schallloch (310) an einer Verbindung mit dem Vorrichtungsgehäuse (100) versehen ist, das Schallgerät (200) in dem Vorrichtungsgehäuse (100) angeordnet ist, das Schallgerät (200) ein Gerätegehäuse (210) und ein elektroakustisches Modul (220) umfasst, das elektroakustische Modul (220) eine erste Membran (221) und eine zweite Membran (222) umfasst, das Gerätegehäuse (210) mit der ersten Membran (221) und der zweiten Membran (222) verbunden ist, und das Vorrichtungsgehäuse (100) mit einem zweiten Schallloch (1111) versehen ist;
mindestens das Gerätegehäuse (210), der Bildschirm (300), das Vorrichtungsgehäuse (100) und die erste Membran (221) einen ersten vorderen Hohlraum (101) bilden, und der erste vordere Hohlraum (101) mit dem ersten Schallloch (310) verbunden ist;
mindestens das Gerätegehäuse (210) und die zweite Membran (222) einen zweiten vorderen Hohlraum (102) bilden, und der zweite vordere Hohlraum (102) mit dem zweiten Schallloch (1111) verbunden ist; und
wenn das elektroakustische Modul (220) in einem ersten Zustand ist, die erste Schallwelle, die durch die Schwingung der ersten Membran (221) gebildet wird, und die zweite Schallwelle, die durch die Schwingung der zweiten Membran (222) gebildet wird, in entgegengesetzten Phasen sind;
**dadurch gekennzeichnet, dass** das Schallgerät (200) einen hinteren Hohlraum (103) aufweist, die erste Membran (221) gegenüber der zweiten Membran (222) angeordnet ist, wobei dazwischen ein erster hinterer Teilhohlraum (1031) gebildet ist, das Gerätegehäuse (210) und das elektroakustische Modul (220) einen zweiten hinteren Teilhohlraum (1032) bilden, der erste hintere Teilhohlraum (1031) mit dem zweiten hinteren Teilhohlraum (1032) verbunden ist, und der hintere Hohlraum (103) den ersten hinteren Teilhohlraum (1031) und den zweiten hinteren Teilhohlraum (1032) umfasst.

2. Elektronische Vorrichtung nach Anspruch 1, wobei das Gerätegehäuse (210) von einer geteilten Struktur ist und ein erstes Gehäuse (211) und ein zweites Gehäuse (212) umfasst, das erste Gehäuse (211) mit dem zweiten Gehäuse (212) verbunden ist, das erste Gehäuse (211) mit der ersten Membran (221) verbunden ist, und das zweite Gehäuse (212) mit der zweiten Membran (222) verbunden ist;
mindestens das erste Gehäuse (211), der Bildschirm (300), das Vorrichtungsgehäuse (100) und die erste Membran (221) den ersten vorderen Hohlraum (101) bilden; und
mindestens das zweite Gehäuse (212) und die zweite Membran (222) den zweiten vorderen Hohlraum (102) bilden.

3. Elektronische Vorrichtung nach Anspruch 1, wobei, wenn das elektroakustische Modul (220) in einem zweiten Zustand ist, die erste Schallwelle, die durch die Schwingung der ersten Membran (221) gebildet wird, und die zweite Schallwelle, die durch die Schwingung der zweiten Membran (222) gebildet wird, in derselben Phase sind.

4. Elektronische Vorrichtung nach Anspruch 3, wobei in dem zweiten Zustand, das Schallgerät (200) ein erster Lautsprecher ist, die elektronische Vorrichtung ferner einen zweiten Lautsprecher (400) umfasst, der zweite Lautsprecher (400) an dem Vorrichtungsgehäuse (100) angeordnet ist und eine Schallemissionsrichtung des ersten Lautsprechers von einer Schallemissionsrichtung des zweiten Lautsprechers (400) verschieden ist.

5. Elektronische Vorrichtung nach Anspruch 1, wobei die erste Membran (221) und die zweite Membran (222) in der Lage sind, entlang einer ersten Richtung zu schwingen, wobei der zweite hintere Teilhohlraum (1032) auf einer ersten Seite des elektroakustischen Moduls (220) angeordnet ist, der zweite hintere Teilhohlraum (1032) und das elektroakustische Modul (220) nacheinander entlang einer zweiten Richtung verteilt sind, die erste Richtung senkrecht zu dem Bildschirm (300) ist und die zweite Richtung senkrecht zu der ersten Richtung ist.

6. Elektronische Vorrichtung nach Anspruch 5, wobei das Gerätegehäuse (210) und das elektroakustische Modul (220) einen dritten, hinteren Teilhohlraum (1033) bilden, der dritte hintere Teilhohlraum (1033) mit mindestens einem von dem ersten hinteren Teilhohlraum (1031) und dem zweiten hinteren Teilhohlraum (1032) verbunden ist, der dritte hintere Teilhohlraum (1033) und das elektroakustische Modul (220) nacheinander entlang der zweiten Richtung verteilt und auf einer zweiten Seite des elektroakustischen Moduls (220) angeordnet sind, die erste Seite und die zweite Seite zwei gegenüberliegende Seiten des elektroakustischen Moduls (220) sind, und eine Höhe des dritten hinteren Teilhohlraums (1033) allmählich in einer Richtung weg von dem elektroakustischen Modul (220) abnimmt.

7. Elektronische Vorrichtung nach Anspruch 1, wobei ein Montagespalt an einer Verbindung zwischen dem Bildschirm (300) und dem Vorrichtungsgehäuse (100) vorhanden ist, und der Montagespalt das erste Schallloch (310) ist.

8. Elektronische Vorrichtung nach Anspruch 1, wobei das Vorrichtungsgehäuse (100) einen inneren Gehäusehohlraum (104) aufweist und das Schallgerät (200) einen hinteren Hohlraum (103) aufweist, wobei
die erste Membran (221) eine erste wasserdichte Membran ist und der erste vordere Hohlraum (101) jeweils gegenüber dem inneren Gehäusehohlraum (104) und dem hinteren Hohlraum (103) abgedichtet und isoliert ist; und/oder
die zweite Membran (222) eine zweite wasserdichte Membran ist, und der zweite vordere Hohlraum (102) jeweils gegenüber dem inneren Gehäusehohlraum (104) und dem hinteren Hohlraum (103) abgedichtet und isoliert ist.

9. Elektronische Vorrichtung nach Anspruch 8, wobei das Vorrichtungsgehäuse (100) einen Rahmenkörper (110) und einen Abdeckkörper (120) umfasst;
der Rahmenkörper (110) einen Einfassungsrahmen (111) und eine Trägerplatte (112) umfasst, der Bildschirm (300) und der Abdeckkörper (120) jeweils mit zwei gegenüberliegenden Seiten des Rahmenkörpers (110) verbunden sind, der Abdeckkörper (120) und der Rahmenkörper (110) den inneren Gehäusehohlraum (104) bilden, das Schallgerät (200) in dem inneren Gehäusehohlraum (104) angeordnet ist, die Trägerplatte (112) zwischen dem Schallgerät (200) und dem Bildschirm (300) und in einem Bereich angeordnet ist, der von dem Einfassungsrahmen (111) umschlossen ist, und die Trägerplatte (112) mit einem ersten Durchgangsloch (1121) versehen ist; und
ein erstes Dichtungselement (201) zwischen dem Gerätegehäuse (210) und der Trägerplatte (112) angeordnet ist, das erste Dichtungselement (201) das erste Durchgangsloch (1121) umgibt, ein zweites Dichtungselement (202) zwischen der Trägerplatte (112) und dem Bildschirm (300) angeordnet ist, und die erste Membran (221), das Gerätegehäuse (210), die Trägerplatte (112), das erste Dichtungselement (201), das zweite Dichtungselement (202) und der Bildschirm (300) den ersten vorderen Hohlraum (101) bilden.

10. Elektronische Vorrichtung nach Anspruch 9, wobei eines von die Trägerplatte (112) und dem Gerätegehäuse (210) mit einem Stellloch (1122) versehen ist, und das andere mit einem Stellvorsprung (2111) versehen ist, und das Stellloch (1122) mit dem Stellvorsprung (2111) zum Positionieren abgestimmt ist.

11. Elektronische Vorrichtung nach Anspruch 9, wobei das zweite Schallloch (1111) in dem Einfassungsrahmen (111) bereitgestellt ist und eine erste Endfläche des Gerätegehäuses (210) mit einer Schallöffnung in Verbindung mit dem zweiten vorderen Hohlraum (102) versehen ist, ein drittes Dichtungselement (203) zwischen der ersten Endfläche und einer Innenwand des Einfassungsrahmens (111) angeordnet ist, und das zweite Schallloch (1111) mit der Schallöffnung verbunden ist.

12. Elektronische Vorrichtung nach Anspruch 9, wobei das Gerätegehäuse (210) mit einem zweiten Durchgangsloch (2112) versehen ist und die Trägerplatte (112) mit einem dritten Durchgangsloch (1123) versehen ist, das zweite Durchgangsloch (2112) mit dem dritten Durchgangsloch (1123) verbunden ist, der zweite vordere Hohlraum (102) mit dem zweiten Durchgangsloch (2112) verbunden ist, und das zweite Schallloch (1111) in dem Einfassungsrahmen (111) bereitgestellt ist;
das Schallgerät (200) ferner eine erste Abdeckplatte (230) umfasst, wobei die erste Abdeckplatte (230) auf dem Gerätegehäuse (210) angeordnet ist und einen Verbindungskanal (105) mit dem Gerätegehäuse (210) bildet, und der Verbindungskanal (105) das dritte Durchgangsloch (1123) und das zweite Schallloch (1111) miteinander verbindet; und
die elektronische Vorrichtung ferner ein viertes Dichtungselement (204) umfasst, wobei das vierte Dichtungselement (204) zwischen der Trägerplatte (112) und dem Gerätegehäuse (210) angeordnet ist und das zweite Durchgangsloch (2112) und das dritte Durchgangsloch (1123) umgibt, und das vierte Dichtungselement (204) und das erste Dichtungselement (201) koplanar sind.

## Revendications

1. Dispositif électronique comprenant un boîtier du dispositif (100), un appareil sonore (200) et un écran (300), dans lequel l'écran (300) recouvre le boîtier du dispositif (100) et est pourvu d'une première ouïe (310) à la jonction avec le boîtier du dispositif (100), l'appareil sonore (200) étant disposé dans le boîtier du dispositif (100), l'appareil sonore (200) comprend un boîtier d'appareil (210) et un module électroacoustique (220), le module électroacoustique (220) comprend un premier diaphragme (221) et un second diaphragme (222), le boîtier (210) est relié au premier diaphragme (221) et au second diaphragme (222), et le boîtier du dispositif (100) est pourvu d'une seconde ouïe (1111) ;
au moins le boîtier de l'appareil (210), l'écran (300), le boîtier du dispositif (100) et le premier diaphragme (221) forment une première cavité frontale (101), et la première cavité frontale (101) est reliée à la première ouïe (310) ;
au moins le boîtier de l'appareil (210) et le second diaphragme (222) forment une seconde cavité frontale (102), et la seconde cavité frontale (102) est reliée à la seconde ouïe (1111) ; et
lorsque le module électroacoustique (220) est dans un premier état, la première onde sonore formée par la vibration du premier diaphragme (221) et la seconde onde sonore formée par la vibration du second diaphragme (222) sont dans des phases opposées ;
**caractérisé en ce que** l'appareil sonore (200) présente une cavité arrière (103), le premier diaphragme (221) est disposé en face du second diaphragme (222), avec une première sous cavité arrière (1031) formée entre eux, le boîtier de l'appareil (210) et le module électroacoustique (220) forment une deuxième sous-cavité arrière (1032), la première sous-cavité arrière (1031) est reliée à la deuxième sous-cavité arrière (1032), et la cavité arrière (103) comprend la première sous-cavité arrière (1031) et la deuxième sous-cavité arrière (1032).

2. Dispositif électronique selon la revendication 1, dans lequel le boîtier de l'appareil (210) est doté d'une structure en deux parties et comprend un premier boîtier (211) et un second boîtier (212), le premier boîtier (211) est relié au second boîtier (212), le premier boîtier (211) est relié au premier diaphragme (221) et le second boîtier (212) est relié au second diaphragme (222) ;
au moins le premier boîtier (211), l'écran (300), le boîtier du dispositif (100) et le premier diaphragme (221) forment la première cavité frontale (101) ; et
au moins le second boîtier (212) et le second diaphragme (222) forment la seconde cavité frontale (102).

3. Dispositif électronique selon la revendication 1, dans lequel, lorsque le module électroacoustique (220) est dans un deuxième état, la première onde sonore formée par la vibration du premier diaphragme (221) et la seconde onde sonore formée par la vibration du second diaphragme (222) sont dans la même phase.

4. Dispositif électronique selon la revendication 3, dans lequel, dans le deuxième état, l'appareil sonore (200) est un premier haut-parleur, le dispositif électronique comprend en outre un deuxième haut-parleur (400), le deuxième haut-parleur (400) est disposé sur le boîtier du dispositif (100), et une direction d'émission sonore du premier haut-parleur est différente d'une direction d'émission sonore du deuxième haut-parleur (400).

5. Dispositif électronique selon la revendication 1, dans lequel le premier diaphragme (221) et le second diaphragme (222) sont capables de vibrer le long d'une première direction, la deuxième sous-cavité arrière (1032) est disposée sur un premier côté du module électroacoustique (220), la deuxième sous-cavité arrière (1032) et le module électroacoustique (220) sont séquentiellement répartis le long d'une deuxième direction, la première direction est perpendiculaire à l'écran (300), et la deuxième direction est perpendiculaire à la première direction.

6. Dispositif électronique selon la revendication 5, dans lequel le boîtier de l'appareil (210) et le module électroacoustique (220) forment une troisième sous-cavité arrière (1033), la troisième sous-cavité arrière (1033) est reliée à au moins une de la première sous-cavité arrière (1031) et de la deuxième sous-cavité arrière (1032), la troisième sous-cavité arrière (1033) et le module électroacoustique (220) sont répartis séquentiellement le long de la deuxième direction et situés sur un deuxième côté du module électroacoustique (220), le premier côté et le deuxième côté sont deux côtés opposés du module électroacoustique (220), et une hauteur de la troisième sous-cavité arrière (1033) diminue progressivement dans une direction s'éloignant du module électroacoustique (220).

7. Dispositif électronique selon la revendication 1, dans lequel un espace d'assemblage est présent au niveau d'un joint entre l'écran (300) et le boîtier du dispositif (100), et l'espace d'assemblage est la première ouïe (310).

8. Dispositif électronique selon la revendication 1, dans lequel le boîtier du dispositif (100) présente une cavité intérieure (104), et l'appareil sonore (200) présente une cavité arrière (103), dans lequel
le premier diaphragme (221) est un premier diaphragme étanche, et la première cavité avant (101) est scellée et isolée de la cavité intérieure du boîtier (104) et de la cavité arrière (103) respectivement ; et/ou
le deuxième diaphragme (222) est un deuxième diaphragme étanche, et la deuxième cavité avant (102) est scellée et isolée de la cavité intérieure du boîtier (104) et de la cavité arrière (103) respectivement.

9. Dispositif électronique selon la revendication 8, dans lequel le boîtier du dispositif (100) comprend un corps de cadre (110) et un corps de couverture (120) ;
le corps de cadre (110) comprend un cadre d'enceinte (111) et une plaque de support (112), l'écran (300) et le corps de couverture (120) sont respectivement reliés à deux côtés opposés du corps de cadre (110), le corps de couverture (120) et le corps de cadre (110) forment la cavité intérieure du boîtier (104), l'appareil acoustique (200) est disposé dans la cavité intérieure du boîtier (104), la plaque de support (112) est située entre l'appareil acoustique (200) et l'écran (300) et dans une région délimitée par le cadre de l'enceinte (111), et la plaque de support (112) est pourvue d'un premier trou traversant (1121) ; et
un premier élément d'étanchéité (201) est disposé entre le boîtier de l'appareil (210) et la plaque de support (112), le premier élément d'étanchéité (201) entoure le premier trou traversant (1121), un deuxième élément d'étanchéité (202) est disposé entre la plaque de support (112) et l'écran (300), et le premier diaphragme (221), le boîtier de l'appareil (210), la plaque de support (112), le premier élément d'étanchéité (201), le deuxième élément d'étanchéité (202), et l'écran (300) forment la première cavité frontale (101).

10. Dispositif électronique selon la revendication 9, dans lequel l'un des éléments parmi la plaque de support (112) et le boîtier de l'appareil (210) est pourvu d'un trou de positionnement (1122), et l'autre d'une saillie de positionnement (2111), et le trou de positionnement (1122) est apparié à la saillie de positionnement (2111) pour le positionnement.

11. Dispositif électronique selon la revendication 9, dans lequel la deuxième ouïe (1111) est ménagée dans le cadre de l'enceinte (111), une première surface d'extrémité du boîtier de l'appareil (210) est pourvue d'une ouïe en communication avec la deuxième cavité avant (102), un troisième élément d'étanchéité (203) est disposé entre la première surface d'extrémité et une paroi intérieure du cadre de l'enceinte (111), et la deuxième ouïe (1111) est reliée à l'ouverture sonore.

12. Dispositif électronique selon la revendication 9, dans lequel le boîtier de l'appareil (210) est pourvu d'un deuxième trou traversant (2112), la plaque de support (112) est pourvue d'un troisième trou traversant (1123), le deuxième trou traversant (2112) est relié au troisième trou traversant (1123), la deuxième cavité frontale (102) est reliée au deuxième trou traversant (2112), et la deuxième ouïe (1111) est ménagée dans le cadre de l'enceinte (111) ;
l'appareil sonore (200) comprend en outre une première plaque de couverture (230), la première plaque de couverture (230) est disposée sur le boîtier de l'appareil (210) et forme un canal de connexion (105) avec le boîtier de l'appareil (210), et le canal de connexion (105) relie le troisième trou traversant (1123) et la deuxième ouïe (1111) ; et
le dispositif électronique comprend en outre un quatrième élément d'étanchéité (204), le quatrième élément d'étanchéité (204) est disposé entre la plaque de support (112) et le boîtier de l'appareil (210), et entoure le deuxième trou traversant (2112) et le troisième trou traversant (1123), et le quatrième élément d'étanchéité (204) et le premier élément d'étanchéité (201) sont coplanaires.
